# EUROPÄISCHE PATENTSCHRIFT

(11) **EP 2 109 722 B1**
(45) Veröffentlichungstag und Bekanntmachung des Hinweises auf die Patenterteilung: **21.07.2010**
(21) Anmeldenummer: 07846355.1
(22) Anmeldetag: 19.11.2007
(51) Int. Cl.: F16D 21/06

(54) **DREHMOMENTÜBERTRAGUNGSEINRICHTUNG**
TORQUE TRANSMISSION DEVICE
DISPOSITIF DE TRANSMISSION DE COUPLE

(30) Priorität: 30.11.2006 DE 102006056976
(43) Veröffentlichungstag der Anmeldung: 21.10.2009
(73) Patentinhaber: LuK Lamellen und Kupplungsbau Beteiligungs KG, 77815 Bühl (DE)
(72) Erfinder: KIMMIG, Karl-Ludwig, 77883 Ottenhöfen (DE)
(86) Internationale Anmeldenummer: PCT/DE2007/002100
(87) Internationale Veröffentlichungsnummer: WO 2008/064648

(56) Entgegenhaltungen:
- DE-A1-102005 037 514
- FR-A- 2 459 906
- FR-A- 2 886 996
- US-A- 3 185 274

## Beschreibung

Die Erfindung betrifft eine Drehmomentübertragungseinrichtung zur Verwendung im Antriebsstrang eines Kraftfahrzeuges zwischen einer Abtriebswelle einer Antriebseinheit und einem Getriebe mit mindestens zwei Getriebeeingangswellen. Die Drehmomentübertragungseinrichtung besitzt wenigstens zwei Reibungskupplungen, die jeweils eine Kupplungsscheibe aufweisen, welche jeweils mit einer der Getriebeeingangswellen koppelbar sind. Zwischen den Reibbelägen der beiden Kupplungsscheiben ist eine Zwischendruckplatte angeordnet, die axial beidseits eine Reibfläche bildet bzw. trägt, wobei die Reibbeläge beider Kupplungsscheiben jeweils zwischen der Zwischendruckplatte und einer Druckplatte einspannbar sind, wobei die jeweilige Druckplatte auf der gegenüber der Zwischendruckplatte abgewandten Seite der Reibbeläge angeordnet ist. Die beiden Druckplatten sind dabei mit der Zwischendruckplatte zumindest drehgekoppelt und mittels Betätigungselementen gegenüber dieser axial verlagerbar. Zumindest die beiden Reibungskupplungen bilden ein vormontiertes Kupplungsaggregat, das getriebeseitig vormontierbar ist und mit einem von der Abtriebswelle der Antriebseinheit getragenen Antriebselement beim Zusammenbau von Antriebseinheit und Getriebe zumindest drehfest verbindbar ist.

Derartige Drehmomentübertragungseinrichtungen sind beispielsweise durch die DE 10 2005 037 514 A1 vorgeschlagen worden.

Der vorliegenden Erfindung lag die Aufgabe zugrunde, Drehmomentübertragungseinrichtungen der eingangs genannten Art sowohl konstruktiv als auch funktionell zu verbessern, insbesondere soll eine einwandfreie Halterung bzw. Positionierung sowohl in radialer als auch in axialer Richtung des Kupplungsaggregates gewährleistet werden. Insbesondere soll durch den Aufbau der Drehmomentübertragungseinrichtung ein zumindest partieller Ausgleich des in vielen Fällen vorhandenen Axialversatzes bzw. des evtl. vorhandenen Fluchtungsfehlers zwischen der Rotationsachse der Abtriebswelle der Antriebseinheit und den Getriebeeingangswellen ermöglicht werden.

Die der vorliegenden Erfindung zugrunde liegenden Aufgaben werden unter anderem dadurch gelöst, dass beim montierten Kupplungsaggregat die Zwischendruckplatte an wenigstens einer der Getriebeeingangswellen in zumindest einer axialen Richtung mittels einer Lagerung abgestützt ist, wobei die Zwischendruckplatte weiterhin gegenüber der Rotationsachse der Getriebeeingangswellen wenigstens eine geringe radiale Verlagerungsmöglichkeit aufweist. Durch eine derartige radiale Verlagerungsmöglichkeit bzw. Ausrichtungsmöglichkeit der Zwischendruckplatte gegenüber der diese axial abstützenden Getriebeeingangswelle kann eine zu große radiale Verspannung zwischen Bauteilen der Drehmomentübertragungseinrichtung vermieden werden, wodurch auch eine Entlastung der die entsprechende Getriebewelle lagernden Getriebelager erfolgt. Zur axialen Abstützung der Zwischendruckplatte in wenigstens eine axiale Richtung ist die Lagerung, die beispielsweise durch ein Wälzlager gebildet sein kann, zumindest in diese entsprechende axiale Richtung an der zugeordneten Getriebeeingangswelle axial fest abgestützt bzw. mit dieser verbunden. Das Wälzlager kann durch ein einreihiges Kugellager gebildet sein, welches entsprechend der auftretenden Beanspruchungen ausgelegt ist.

Besonders vorteilhaft kann es sein, wenn die radiale Verlagerungsmöglichkeit zwischen der auf einer der Getriebeeingangswelle aufgenommenen Lagerung und der Zwischendruckplatte vorgesehen ist. Die radiale Verlagerungsmöglichkeit kann jedoch auch zwischen der Lagerung und der diese aufnehmenden Getriebeeingangswelle angeordnet werden.

In besonders einfacher Weise kann die radiale Verlagerungsmöglichkeit durch Vorsehen eines radialen Spieles gewährleistet werden, wobei dieses Spiel zwischen einem die Zwischendruckplatte zumindest axial abstützenden Bauteil und der Zwischendruckplatte vorgesehen sein kann. Das entsprechende Spiel kann jedoch auch an einer anderen Stelle vorgesehen werden.

Weiterhin kann es zweckmäßig sein, wenn die Zwischendruckplatte in radialer Richtung entgegen eines zwischen dieser und der Lagerung und/oder der Lagerung und der diese aufnehmenden Getriebeeingangswelle vorgesehenen Verschiebewiderstandes verlagerbar ist. Zweckmäßig kann es dabei sein, wenn der Verschiebewiderstand ausreichend groß ist, um die Zwischendruckplatte in radialer Richtung in einer definierten Lage zu haltern. Der Verschiebewiderstand kann beispielsweise durch eine Reibverbindung erzeugt werden.

Zur axialen Abstützung kann die Zwischendruckplatte einen radial inneren ringförmigen Bereich besitzen, der axial abgestützt und/oder eingespannt ist.

Die Lagerung kann ein auf einer der Getriebeeingangswellen, vorzugsweise der Hohlwelle, aufgenommenes Lager umfassen, welches die Zwischendruckplatte aufnimmt bzw. zumindest axial abstützt. Die Lagerung kann dabei ein Wälzlager umfassen mit einem auf einer der Getriebeeingangswellen aufgenommenen Innenlagerring und einem Außenlagerring, der mit der Zwischendruckplatte zumindest in eine axiale Richtung wirkungsmäßig zusammenwirkt. Vorzugsweise werden über die Lagerung die Betätigungskräfte der Reibungskupplungen abgestützt bzw. abgefangen.

Weitere Vorteile, Merkmale und Einzelheiten der Erfindung ergeben sich aus der nachfolgenden Beschreibung.

Es zeigen:
- Figur 1: einen Schnitt durch eine erfindungsgemäße Drehmomentübertragungseinrich- tung,
- Figur 2: eine perspektivische Darstellung einzelner Bauteile der in Figur 1 dargestellten Drehmomentübertragungseinrichtung,
- Figur 3: eine weitere perspektivische Darstellung von Bauteilen der in Figur 1 dargestell- ten Drehmomentübertragungseinrichtung.
- Fig. 4a) bis 4d), Figur 5,:

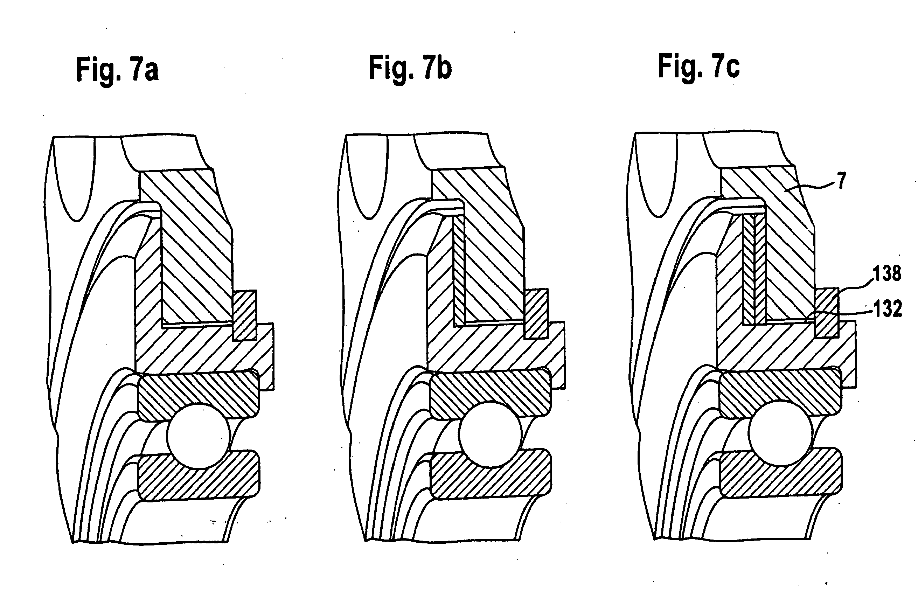

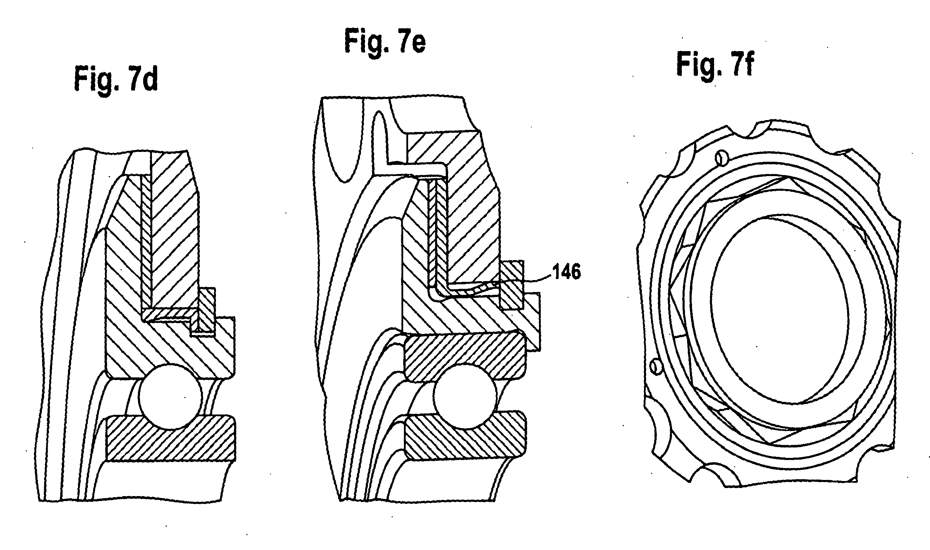

- Figur 6 und Fig. 7a bis 7f): zeigen verschiedene Ausführungsvarianten von Lagerungen bzw. Elementen, die bei einer Drehmomentübertragungseinrichtung, zum Beispiel gemäß den Figuren 1 bis 3, Verwendung finden können.

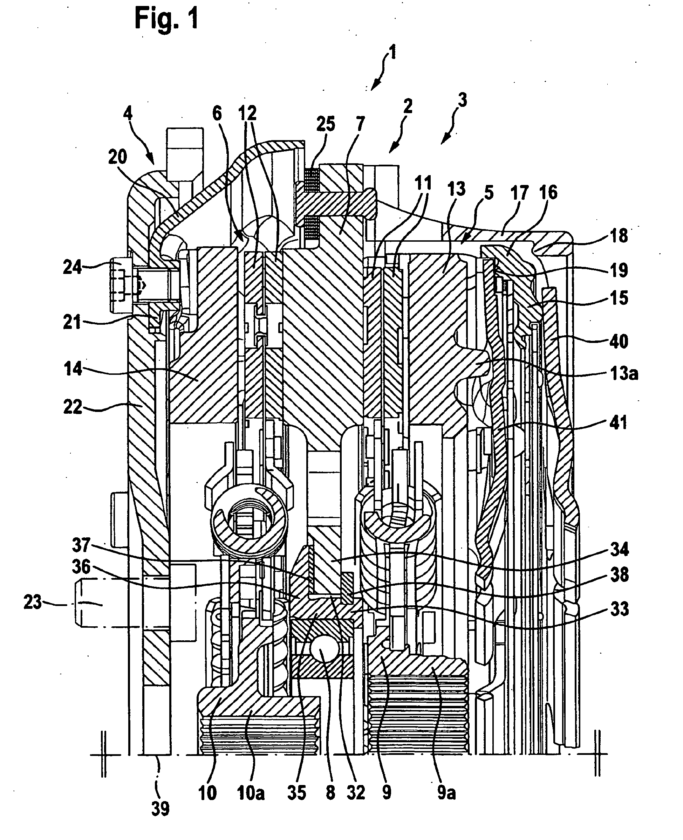

Die in Figur 1 dargestellte Drehmomentübertragungseinrichtung 1 umfasst zwei Untereinheiten 3, 4. Die Untereinheit 3 umfasst wenigstens zwei Reibungskupplungen 5, 6 und ist auf einem nicht näher dargestellten Getriebe vormontierbar, und zwar in ähnlicher Weise wie dies in der DE 10 2005 037 514 A1 beschrieben ist. Gegenüber diesem bekannten Stand der Technik unterscheidet sich jedoch das Kupplungsaggregat gemäß Figur 1, wie dies im Folgenden noch näher beschrieben wird, durch die Möglichkeit einer radialen Verlagerung der den beiden Reibungskupplungen 5 und 6 gemeinsamen Zwischendruckplatte 7 gegenüber der Getriebeeingangswelle, auf der eine mit der Zwischendruckplatte 7 zusammen wirkende Lagerung 8 aufgenommen ist bzw. wird. Die Lagerung 8 gemäß Figur 1 ist ähnlich ausgebildet wie diejenige gemäß Figur 1 der DE 10 2005 037 514 A1. Diese Lagerung kann jedoch auch eine andere Ausgestaltung aufweisen, wie dies zum Beispiel in Zusammenhang mit den übrigen Figuren der DE 10 2005 037 514 A1 bekannt geworden ist. Die in Figur 1 dargestellte Lagerung 8 ist zur Aufnahme auf der äußeren, als Hohlwelle ausgebildeten Getriebeeingangswelle, welche die zweite Getriebeeingangswelle aufnimmt, vorgesehen.

Bezüglich der Weiterbildung des erfindungsgemäßen Kupplungsaggregates 1 wird weiterhin auf die in der DE 10 2006 022 054 A1 beschriebenen Merkmale verwiesen. Dabei wird insbesondere auf die in dieser Schrift beschriebene mögliche Aufteilung zumindest der motorseitig vorgesehenen Kupplungsscheibe hingewiesen. Eine solche Aufteilung vereinfacht die Montage und die axiale Sicherung der Lagerung 8 auf der entsprechenden Getriebeeingangswelle.

Die Drehmomentübertragungseinrichtung 1 umfasst zwei Kupplungsscheiben 9,10, die jeweils mit einer Getriebeeingangswelle drehfest koppelbar sind. Hierfür besitzen die Kupplungsscheiben 9,10 eine innenverzahnte Nabe 9a, 10a, welche mit einer Außenverzahnung der Getriebeeingangswellen zusammenwirken. Die Nabe 9a ist auf einer so genannten hohlen Getriebeeingangswelle aufnehmbar, welche eine weitere koaxial angeordnete Getriebeeingangswelle aufnimmt, die mit der Nabe 10a verbindbar ist.

Bei dem dargestellten Ausführungsbeispiel sind die Kupplungsscheiben 9 und 10 mit einem Drehschwingungsdämpfer ausgestattet. Wenigstens eine der Kupplungsscheiben 9 und 10 könnte jedoch auch zumindest im Wesentlichen drehstarr ausgestaltet sein, wie dies durch die vorgenannten Schriften bekannt ist.

Die Kupplungsscheiben 9 und 10 tragen radial außen Reibbeläge 11,12, axial zwischen denen jeweils vorzugsweise eine so genannte Belagfederung vorgesehen ist, die einen progressiven Aufbau bzw. Abbau des von den Reibungskupplungen 5 und 6 übertragbaren Drehmomentes ermöglicht.

Auf der gegenüber der Zwischendruckplatte 7 abgewandten Seite der Kupplungsscheiben 9 und 10 ist jeweils eine Druckplatte 13, 14 angeordnet, die der entsprechenden Reibungskupplung 5, 6 zuzuordnen sind.

Die Druckplatte 13 der Reibungskupplung 5 ist entweder mittelbar oder unmittelbar mit der Zwischendruckplatte drehfest, jedoch begrenzt axial verlagerbar verbunden. Hierfür können beispielsweise Blattfederelemente verwendet werden, die vorzugsweise gleichmäßig über den Umfang verteilt sind.

In gleicher bzw. ähnlicher Weise ist auch die Druckplatte 14 der Reibungskupplung 6 mit der Zwischendruckplatte 7 gekoppelt.

Mit der Zwischendruckplatte 7 ist ein Gehäuse 15 verbunden, von dem lediglich ein radial verlaufender Bereich 16 in Figur 1 erkennbar ist. Dieses Gehäuse 15 besitzt axial verlaufende Bereiche, welche die Druckplatte 13 radial außen übergreifen und mit radial außerhalb der Reibbeläge 11 verlaufenden Bereichen der Zwischendruckplatte 7 fest verbunden sind. Durch diese Verbindung ist auch das Gehäuse 15 mittels der Lagerung 8 zumindest in eine axiale Richtung axial abgestützt.

Die Druckplatte 14 trägt ein ringförmiges Zugelement 17, das auf der gegenüber der Druckplatte 13 abgewandten Seite des radialen Bereiches 16 Abstützbereiche 18 für ein Hebelelement 40 bildet. Das Hebelelement 40 kann durch ein tellerfederartiges Bauteil gebildet sein, das eine Mehrzahl von in ringförmiger Anordnung vorgesehenen Hebeln aufweist. Das Hebelelement 40 kann jedoch auch durch eine Mehrzahl von Einzelhebeln gebildet sein, wobei diese vorzugsweise über ein Verbindungselement miteinander gekoppelt sind.

Bezüglich der Ausgestaltung eines derartigen Bauteils wird ebenfalls auf den vorerwähnten Stand der Technik verwiesen, insbesondere auf die DE 10 2005 037 514 A1.

Zum Betätigen der Reibungskupplung 5 ist axial zwischen der Druckplatte 13 und dem radialen Bereich 16 des Kupplungsgehäuses 15 ebenfalls ein Hebelelement 41, das membranartig bzw. tellerfederartig ausgebildet sein kann, vorgesehen. Das entsprechende Hebelelement 41 stützt sich dabei mit radial äußeren Bereichen an einer Abwälzauflage 19 des Gehäuses 15 ab und beaufschlagt mit radial weiter innen liegenden Bereichen axiale Nocken bzw. Abstützbereiche 13a der Druckplatte 13. Diesbezüglich wird ebenfalls auf den vorerwähnten Stand der Technik verwiesen.

Die Zwischendruckplatte 7 ist mit einem hier ringförmigen Verbindungsbauteil 20 verbunden, das hier topfförmig ausgebildet ist. Das Verbindungsbauteil 20 besitzt einen motorseitig angeordneten, radialen Bereich 21, der mit einer hier als Schwungmasse ausgebildeten Antriebsplatte 22 verbindbar ist. Die Antriebsplatte 22 ist radial innen mittels Schrauben 23 mit der Abtriebswelle einer Antriebsmaschine, wie insbesondere einer Brennkraftmaschine, verbindbar. Im radial äußeren Bereich der Antriebsplatte 22 sind Schraubverbindungen 24 vorgesehen, mittels derer das Verbindungsbauteil 20, ähnlich wie bei einem Drehmomentwandler, an der Antriebsplatte 22 befestigt wird.

Das teller- bzw. topfförmige Verbindungsbauteil 20 kann auch auf eine andere Art und Weise mit der Antriebsplatte 22 verbunden werden. So könnte beispielsweise zwischen den beiden Bauteilen 20 und 22 eine axiale Steckverbindung vorgesehen werden, die beim Zusammenfügen von Antriebseinheit und Getriebe wirksam wird. Diese Steckverbindung bzw. die diese bildenden Profilierungen, wie zum Beispiel Verzahnungen, können zur Vermeidung von Geräuschen in Umfangsrichtung verspannt sein. Auch kann eine axial wirksame, automatische Verriegelungsvorrichtung vorgesehen werden.

Die zwischen dem Verbindungsbauteil 20 und der Antriebsplatte 22 herzustellende feste Verbindung, die hier durch die Schraubverbindungen 24 gewährleistet wird, ist vorzugsweise derart ausgebildet, dass eine genaue Zentrierung zwischen den beiden Bauteilen 20 und 22 erfolgt, so dass das die beiden Kupplungen 5 und 6 umfassende Kupplungsaggregat zumindest teilweise mittels des Verbindungsbauteils 20 radial zentriert werden kann.

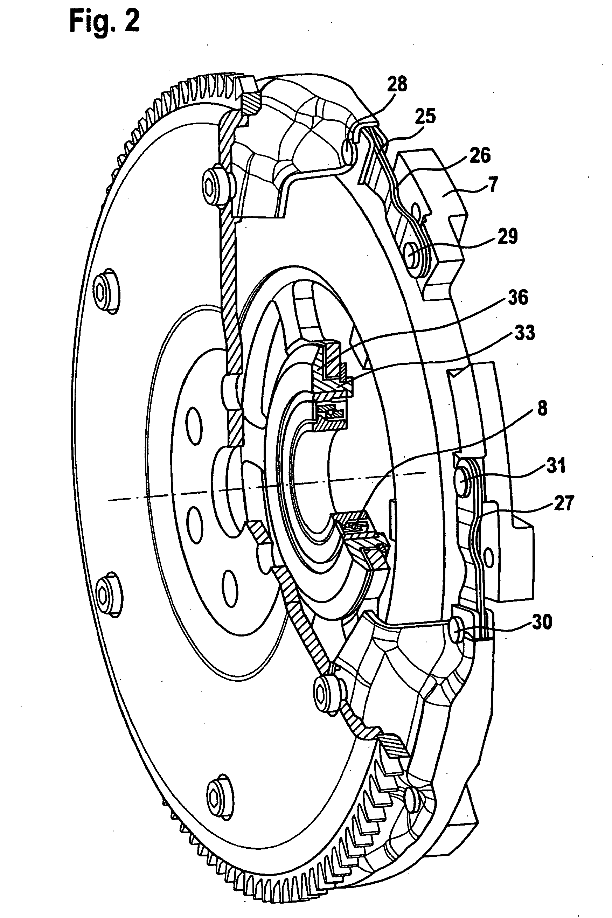

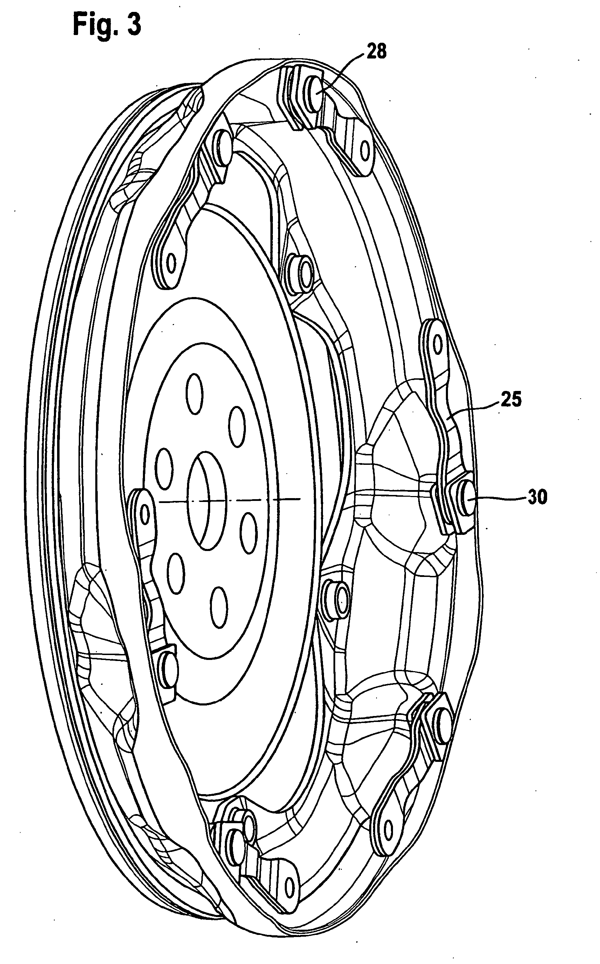

Wie insbesondere aus den Figuren 2 und 3 zu entnehmen ist, erfolgt die Verbindung zwischen dem Verbindungsbauteil 20 und dem die Zwischendruckplatte 7 aufweisenden Kupplungsaggregat mittels Blattfederverbindungen 25, die über den Umfang verteilt angeordnet sind. Bei dem dargestellten Ausführungsbeispiel sind zwei Gruppen von Blattfederverbindungen 26, 27 vorgesehen, die in Umfangsrichtung entgegengerichtet wirken. Dies bedeutet, dass zum Beispiel bei Zugbeanspruchung der Blattfedern 26 die Blattfedern 27 auf Knickung beansprucht werden und umgekehrt. Bei dem dargestellten Ausführungsbeispiel sind die Blattfederverbindungen 25 jeweils durch mehrere Einzelblattfedern, die axial aufeinander geschichtet sind, gebildet. Die Anzahl der aufeinander geschichteten Einzelblattfedern kann dabei in der Größenordnung zwischen zwei und zehn, vorzugsweise zwischen vier und acht liegen.

Die die Blattfederverbindungen 25 bildenden Blattfedern 26, 27 sind bei dem dargestellten Ausführungsbeispiel einerseits mit dem Verbindungsbauteil 20 fest verbunden und andererseits mit der Zwischendruckplatte 7. Vorzugsweise erfolgen diese Verbindungen, wie dargestellt, mittels Nietverbindungen 28, 29 bzw. 30, 31. Die Blattfedergruppen 26 und 27 ermöglichen eine kardanartige Aufhängung des die Reibungskupplungen 5 und 6 aufweisenden Kupplungsaggregates an dem Verbindungsbauteil 20. Dies bedeutet, dass die Blattfedergruppen 26 und 27 eine drehfeste Verbindung, jedoch zumindest eine gewisse winkelmäßige Ausrichtung zwischen der Zwischendruckplatte 7 und dem Verbindungsbauteil 20 ermöglichen.

Wie insbesondere aus Figur 1 zu entnehmen ist, wird die Zwischendruckplatte 7 bei im Fahrzeug montierter Drehmomentübertragungseinrichtung 1 mittels der dann axial auf der als hohle Welle ausgebildeten Getriebeeingangswelle eines Getriebes festgelegten Lagerung 8 zumindest in eine axiale Richtung abgestützt bzw. festgelegt. Diese axiale Festlegung ist dabei vorzugsweise derart gewählt, dass über die Lagerung 8 die zum Betätigen der Reibungskupplungen 5 und 6 erforderlichen Kräfte, welche bei dem dargestellten Ausführungsbeispiel durch die vorerwähnten Hebelelemente in das Kupplungsaggregat eingeleitet werden, axial abgestützt werden. Bei dem dargestellten Ausführungsbeispiel gemäß Figur 1 muss somit die Zwischendruckplatte 7 zumindest in Richtung axial auf die Antriebsplatte 22 zu abgestützt sein. Vorteilhaft kann es jedoch auch sein, wenn die Lagerung 8 derart ausgebildet ist, dass eine axiale Festlegung der Zwischendruckplatte 7 in beide axialen Richtungen erfolgt. Dies ist insbesondere dann vorteilhaft, wenn die beiden Reibungskupplungen 5 und 6 eine axial unterschiedliche Betätigungsrichtung aufweisen.

Die Zwischendruckplatte 7 ist gegenüber der die Lagerung 8 aufnehmenden Getriebeeingangswelle in radialer Richtung begrenzt verlagerbar, so dass zumindest ein Fluchtungsfehler zwischen der Abtriebswelle, der die Antriebsplatte 22 antreibenden Antriebseinheit und der die Lagerung 8 bzw. die Naben 9a, 10a aufnehmenden Getriebeeingangswellen ermöglicht ist.

Bei dem dargestellten Ausführungsbeispiel wird diese begrenzte radiale Verlagerungsmöglichkeit dadurch gewährleistet, dass wirkungsmäßig zwischen der das Lager 8 aufnehmenden Getriebeeingangswelle und der Zwischendruckplatte 7 ein vorzugsweise ringförmiges Spiel 32 vorgesehen wird. Bei dem dargestellten Ausführungsbeispiel ist dieses Spiel 32 wirkungsmäβig zwischen der Lagerung 8 bzw. einem von diesem getragenen Zwischenelement 33 und den radial inneren Bereichen 34 der Zwischendruckplatte 7 vorgesehen. Das Zwischenelement 33 besitzt einen axialen Bereich 35, sowie einen sich daran anschließenden radialen Bereich 36, an dem sich die radial inneren Bereiche 34 der Zwischendruckplatte 7 axial abstützen. Bei dem dargestellten Ausführungsbeispiel erfolgt diese axiale Abstützung unter Zwischenlegung eines Reib- bzw. Gleitbelages 37. Zur axialen Sicherung ist auf der dem radialen Bereich 26 abgewandten Seite des radial inneren Bereiches 34 ein Sicherungselement 38 vorgesehen.

Obwohl die axiale Sicherung zwischen der Zwischendruckplatte 7 und der das Lager 8 aufnehmenden Getriebewelle bzw. dem Zwischenelement 33 praktisch reibungsfrei erfolgen kann, ist es für viele Anwendungsfälle besonders zweckmäßig, wenn die radial inneren Bereiche 34 der Zwischendruckplatte 7 zumindest geringfügig axial verspannt werden, so dass die Zwischendruckplatte 7 entgegen eines radialen Verschiebewiderstandes gegenüber der Getriebeeingangswelle bzw. der Lagerung 8 verschoben werden kann. Um einen derartigen Verschiebewiderstand zu erzeugen, kann das Sicherungselement 38 beispielsweise durch ein tellerfederartiges Bauteil gebildet sein, welches die radial inneren Bereiche 34 in Richtung der radialen Bereiche 36 des Zwischenelementes 33 beaufschlagt. Bei dem dargestellten Ausführungsbeispiel würde eine unmittelbare Abstützung zwischen dem Sicherungselement 38 und den Bereichen 34 erfolgen. Für viele Anwendungszwecke ist es jedoch vorteilhaft, wenn zwischen dem axial wirksamen, gegebenenfalls tellerfederartig ausgebildeten Sicherungselement 38 und den radialen Bereichen 34 zumindest ein Reib- bzw. Gleitbelag zwischengelegt ist. Falls notwendig, kann weiterhin zwischen einem solchen Reib- bzw. Gleitbelag und dem Sicherungselement 38 eine ringförmige Abstütz- bzw. Anpressscheibe, die vorzugsweise aus Stahl besteht, vorgesehen werden.

In Abänderung des in Figur 1 dargestellten Ausführungsbeispiels kann ein entsprechendes radiales Spiel 32 auch zwischen der Lagerung 8 und der dieses aufnehmenden Getriebeeingangswelle vorgesehen werden. Bei Verwendung eines Wälzlagers muss dann zwischen der Getriebeeingangswelle und dem Innenring der Lagerung eine entsprechende axiale Abstützung bzw. radiale Verschiebemöglichkeit gegebenenfalls entgegen eines Widerstandes ermöglicht werden, und zwar in ähnlicher Weise, wie dies zwischen den radial inneren Bereichen 34 der Zwischendruckplatte 7 und dem Zwischenelement 33 ermöglicht ist.

Für manche Anwendungsfälle kann es auch vorteilhaft sein, wenn zwischen der Lagerung 8 und der Zwischendruckplatte 7 bzw. zwischen der Lagerung 8 und der diese aufnehmenden bzw. axial abstützenden Getriebeeingangswelle eine zumindest geringe Pendelmöglichkeit vorhanden ist, die beispielsweise durch eine kugelzonenähnlich ausgebildete Lagerung bzw. Abstützung gewährleistet wird, deren Mittelpunkt bzw. Drehpunkt vorzugsweise zumindest annähernd auf der Rotationsachse 39 der Drehmomentübertragungseinrichtung 1 bzw. der Abtriebswelle der die Antriebsplatte 22 antreibenden Antriebseinheit liegt. Dadurch können evtl. vorhandene Fluchtungsfehler zwischen der Rotationsachse der Abtriebswelle und der Rotationsachse der Getriebeeingangswellen ausgeglichen werden und dadurch auch unerwünschte Beanspruchungen innerhalb des Gesamtsystems vermieden werden.

Die Drehmomentübertragung zwischen Motor und Getriebe wird also über die im Wesentlichen torsionssteife Verbindung, bestehend aus Antriebsplatte 22, ringförmiges Verbindungsbauteil 20 und Blattfederanordnung 25, gewährleistet, wobei über die Blattfederanordnung 25 die Drehmomentübertragung von der Kurbelwelle zunächst auf die Zwischendruckplatte 7 und mittels dieser auf die Kupplungen übertragen wird. Diese Anordnung zentriert die Doppelkupplung 2, welche durch die Untereinheit 3 gebildet ist, gegenüber der Rotationsachse der Kurbelwelle der Brennkraftmaschine bzw. des Motors. Eventuell vorhandene Winkelversätze zwischen Rotationsachse der Kurbelwelle und Rotationsachse der Getriebeeingangswelle können insbesondere durch die Blattfederanordnung 25 ausgeglichen werden.

Die axiale Lagerung zwischen der Zwischendruckplatte 7 und der entsprechenden Getriebeeingangswelle nimmt die Betätigungskräfte der Reibungskupplungen 5 und 6 sowie weitere axial wirkende Kräfte auf und stützt sie auf der entsprechenden Getriebeeingangswelle ab. Gleichzeitig verfügt diese axiale Lagerung über eine zumindest geringe radiale Verlagerungsmöglichkeit gegenüber der entsprechenden Getriebeeingangswelle bzw. eine geringe radiale Steifigkeit und ermöglicht somit den Ausgleich des Radialversatzes zwischen der Rotationsachse der Kurbelwelle und der Rotationsachse der entsprechenden Getriebeeingangswelle.

Die axiale Lagerung kann auf verschiedene Weise ausgeführt sein, so zum Beispiel als axiales Wälzlager, als axiales Gleitlager oder als Kombination zum Beispiel aus einem radialen Wälzlager und einem axialen Gleitlager oder umgekehrt. Die getriebeseitige axiale Lagerung der Zwischendruckplatte 7 bzw. der Untereinheit 3 kann mit einer Sicherung gegen axiales Abheben des Lagers ausgeführt sein. Es sind jedoch auch Ausgestaltungen denkbar, bei denen eine derartige axiale Sicherung nicht erforderlich ist. Letzteres kann zum Beispiel der Fall sein bei Doppelkupplungen 2 mit über das Ausrücksystem axial vorbelasteten Hebelelementen 40 bzw. 41, da dadurch gewährleistet wird, dass zum Beispiel der radial innere Bereich 34 der Zwischendruckplatte 7 stets axial in Richtung des radial verlaufenden Abstützbereiches 36 gedrängt wird.

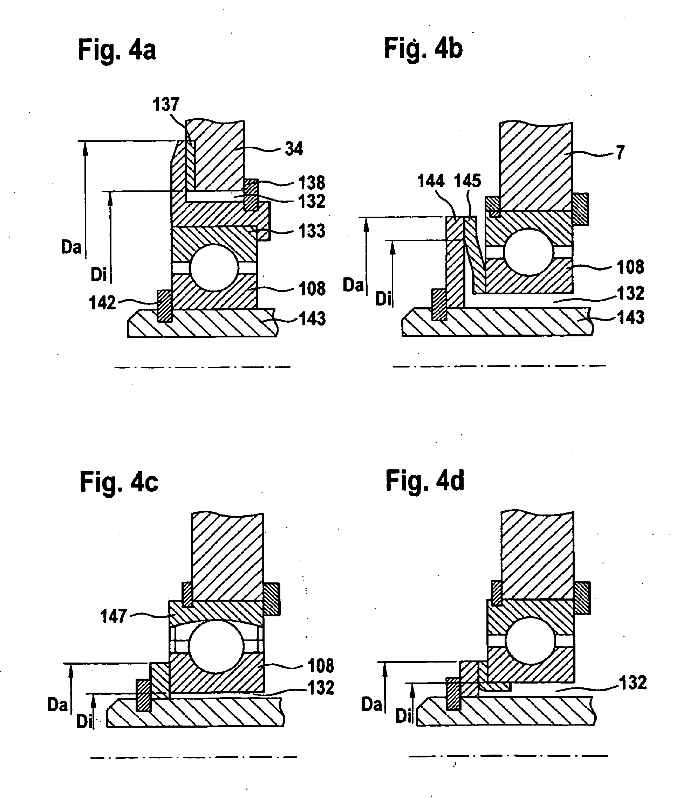

Wie aus Figur 4, welche verschiedene Ausführungsvarianten a) bis d) darstellt, ersichtlich ist, kann die Kombination radiales Lager mit axialem Lager auf verschiedene Weise realisiert werden. In Figur 4a) erfolgt die radiale Lagerung mittels eines Wälzlagers, wie eines Kugellagers 108, welches vereinfacht dargestellt ist. Auf diesem Lager 108 ist zur Bildung einer axialen Gleitlagerung 137 ein als Lagerbuchse ausgestaltetes Zwischenelement 133 aufgeschrumpft. Der zur axialen Abstützung dienende radiale Bereich des Zwischenelementes 33 kann jedoch auch einteilig mit dem äußeren Lagerring des Wälzlagers 108 ausgebildet sein. Das radiale Spiel 132 ist zwischen dem äußeren Lagerring des Wälzlagers 108 bzw. dem Zwischenelement 133 und den radial inneren Bereichen 34 der Zwischendruckplatte 7 vorgesehen.

In Figur 4 sind auch zwei axiale Abstütz- bzw. Positionierringe 138, 142 dargestellt sowie der Endbereich 143 einer Getriebeeingangswelle, die hier durch eine Hohlwelle gebildet ist. Innerhalb dieser Hohlwelle kann eine weitere Getriebeeingangswelle vorgesehen sein.

Bei der Ausgestaltung gemäß Figur 4b) ist das radiale Spiel 132 zwischen der Getriebeeingangswelle 143 und dem hier als Wälzlager ausgebildeten Lager 108 vorgesehen. Auf dem äußeren Lagerring dieses Lagers 108 ist die Zwischendruckplatte 7 aufgenommen und axial gesichert. Der innere Lagerring des Lagers 108 wird über eine auf der Getriebeeingangswelle 143 aufgenommene Abstützplatte 144 axial abgestützt. Zwischen dem Lager 108 bzw. hier dem radial inneren Lagerring des Lagers 108 und der durch die Abstützplatte 144 gebildeten axialen Abstützung ist eine hier axial federnd ausgebildete Abstützscheibe 145 vorgesehen. Die Abstützscheibe 145 kann eine axiale Federung bzw. Verlagerung in der Größenordnung von 01 bis 0,5 mm des Lagers 108 bzw. der Zwischendruckplatte 7 ermöglichen. Falls erforderlich, kann auf der der Abstützscheibe 144 axial abgewandten Seite des Lagers 108 ebenfalls ein axialer Sicherungsring vorgesehen werden, wodurch auch eine axiale Einspannung des inneren Lagerringes gewährleistet werden kann.

Wie aus Figur 4c) zu entnehmen ist, kann die Lagerung 108 auch ein Sonderlager, wie insbesondere ein Pendellager 147, umfassen. Das Pendellager 147 kann, wie dargestellt, als Pendelkugellager oder als Pendelrollenlager ausgebildet sein.

In Figur 4d) ist eine weitere Lagerausführung dargestellt.

Bei einer Ausgestaltung gemäß Figur 4a) ist die wirksame Gleitfläche zwischen den Durchmessern Da und Di größer als bei den Ausführungsformen gemäß Figur 4b) bis 4d).

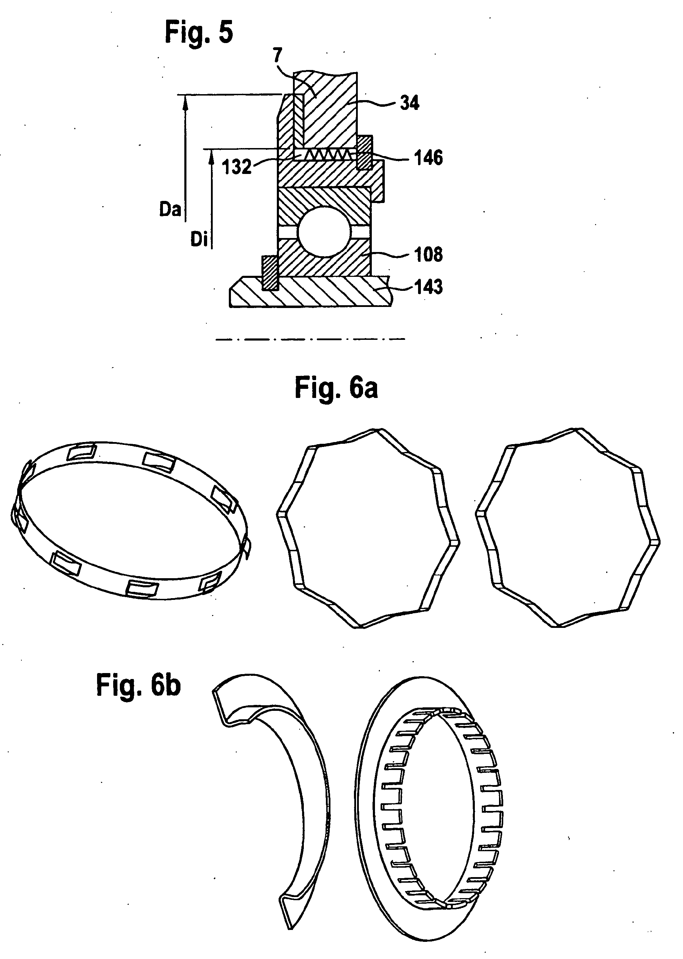

In Figur 5 ist eine weitere Ausführungsvariante einer Lagerung 108 dargestellt, wobei wirkungsmäßig zwischen der Getriebeeingangswelle 143 und dem radial inneren Bereich 34 der Zwischendruckplatte 7 ein radial elastisches Element bzw. eine Federung 146 angeordnet ist. Die Federung 146 kann je nach Anwendungsfall unterschiedlich steif ausgeführt werden. Die radiale Federung kann mittels unterschiedlicher Federelemente erzeugt werden, die zumindest in den in den Figuren 4a) bis 4d) und in Figur 5 schematisch dargestellten Spalt 132 aufgenommen sind. In Figur 6 sind verschiedene Ausführungsformen derartiger Federelemente 146 dargestellt. Die Kombination der radialen Reibeinspannung des inneren Bereiches 34 einer Zwischendruckplatte 7 und der in radialer Richtung nachgiebigen Federelemente bewirkt eine Dämpfung der evtl. bei zumindest bestimmten Betriebszuständen des Kraftfahrzeuges bzw. der Brennkraftmaschine auftretenden Radialschwingungen des Kupplungsaggregates der Doppelreibungskupplung.

In Figur 8 sind nochmals die in Zusammenhang mit den vorangegangenen Figuren beschriebenen Lagerungen detaillierter und perspektivisch dargestellt.

Die Ausführungsbeispiele sind nicht als Einschränkung der Erfindung zu verstehen. Vielmehr sind im Rahmen des Schutzumfanges der Ansprüche zahlreiche Abänderungen und Modifikationen möglich.

### Bezugszeichenliste

- 1: Drehmomentübertragungseinrichtung
- 2: Doppelkupplung
- 3: Untereinheit
- 4: Untereinheit
- 5: Reibungskupplung
- 6: Reibungskupplung
- 7: Zwischendruckplatte
- 8: Lagerung
- 9: Kupplungsscheibe
- 9a: Nabe
- 10: Kupplungsscheibe
- 10a: Nabe
- 11: Reibbelag
- 12: Reibbelag
- 13: Druckplatte
- 13a: Abstützbereich
- 14: Druckplatte
- 15: Gehäuse
- 16: Radial verlaufender Bereich
- 17: Zugelement
- 18: Abstützbereich
- 19: Abwälzauflage
- 20: Verbindungsbauteil
- 21: Radialer Bereich
- 22: Antriebsplatte
- 23: Schrauben
- 24: Schraubverbindungen
- 25: Blattfederverbindungen
- 26: Blattfeder
- 27: Blattfeder
- 28: Nietverbindung
- 29: Nietverbindung
- 30: Nietverbindung
- 31: Nietverbindung
- 32: Ringförmiges Spiel
- 33: Zwischenelement
- 34: Radial innerer Bereich
- 35: Axialer Bereich
- 36: Radialer Bereich
- 37: Reib- bzw. Gleitbelag
- 38: Sicherungselement
- 39: Rotationsachse
- 40: Hebelelement
- 41: Hebelelement

- 108: Kugellager
- 132: Radiales Spiel
- 133: Zwischenelement
- 137: axiale Gleitlagerung
- 138: Abstütz- bzw. Positionierringe
- 142: Abstütz- bzw. Positionierringe
- 143: Getriebeeingangswelle
- 144: Abstützplatte
- 145: Abstützscheibe
- 146: Federelement
- 147: Pendellager

- Da: Durchmesser
- Di: Durchmesser

## Patentansprüche

1. Drehmomentübertragungseinrichtung (1) zur Verwendung im Antriebsstrang eines Kraftfahrzeuges zwischen einer Abtriebswelle einer Antriebseinheit und einem Getriebe mit mindestens zwei Getriebeeingangswellen, wobei die Drehmomentübertragungseinrichtung wenigstens zwei Reibungskupplungen (5,6) umfasst, die jeweils eine Kupplungsscheibe (9,10) aufweisen, die jeweils mit einer der Getriebeeingangswellen koppelbar sind, und zwischen den Reibbelägen der beiden Kupplungsscheiben eine Zwischendruckplatte (7) angeordnet ist, wobei die Reibbeläge beider Kupplungsscheiben jeweils zwischen der Zwischendruckplatte und einer Druckplatte (13, 14) einspannbar sind, wobei die jeweilige Druckplatte (13, 14) auf der gegenüber der Zwischendruckplatte (7) abgewandten Seite der Reibbeläge angeordnet sind, weiterhin die beiden Druckplatten (13, 14) mit der Zwischendruckplatte (7) zumindest drehgekoppelt und mittels von Betätigungselementen (40, 4) gegenüber dieser axial verlagerbar sind, wobei zumindest die beiden Reibungskupplungen ein vormontiertes Kupplungsaggregat bilden, das getriebeseitig vormontierbar ist und mit einem von der Abtriebswelle der Antriebseinheit getragenen Antriebselement beim Zusammenbau von Antriebseinheit und Getriebe zumindest drehfest verbindbar ist; **dadurch gekennzeichnet, dass** beim montierten Kupplungsaggregat die Zwischendruckplatte (7) an zumindest einer der Getriebeeingangswellen in zumindest eine axiale Richtung über eine Lagerung (8) abgestützt ist, wobei die Zwischendruckplatte (7) gegenüber der Rotationsachse der Getriebeeingangswellen eine radiale Verlagerungsmöglichkeit aufweist.

2. Drehmomentübertragungseinrichtung (1) nach Anspruch 1, **dadurch gekennzeichnet, dass** die radiale Vertagerungsmöglichkeit zwischen der auf einer der Getriebeeingangswellen (143) aufgenommenen Lagerung (8) und der Zwischendruckplatte (7) vorgesehen ist.

3. Drehmomentübertragungseinrichtung (1) nach Anspruch 1 oder 2, **dadurch gekennzeichnet, dass** die radiale Verlagerungsmöglichkeit durch Vorsehen eines radialen Spiels zwischen einem die Zwischendruckplatte (7) zumindest axial abstützenden Bauteils (133) und der Zwischendruckplatte gewährleistet ist.

4. Drehmomentübertragungseinrichtung (1) nach einem der Ansprüche 1 bis 3, **dadurch gekennzeichnet, dass** die Zwischendruckplatte (7) in radialer Richtung entgegen eines zwischen dieser und der Lagerung (8) und/oder der Lagerung (8) und der diese aufnehmenden Getriebeeingangswelle vorgesehenen Verschiebewiderstandes verlagerbar ist.

5. Drehmomentübertragungseinrichtung (1) nach Anspruch 4, **dadurch gekennzeichnet, dass** der Verschiebewiderstand ausreichend groß ist, um die Zwischendruckplatte (7) in radialer Richtung in einer definierten Lage zu positionieren.

6. Drehmomentübertragungseinrichtung (1) nach Anspruch 4 oder 5, **dadurch gekennzeichnet, dass** der Verschiebewiderstand zumindest durch eine Reibverbindung erzeugt wird.

7. Drehmomentübertragungseinrichtung (1) nach einem der Ansprüche 1 bis 6, **dadurch gekennzeichnet, dass** die Zwischendruckplatte (7) einen radial inneren, umfangsmäßigen Bereich (34) aufweist, der axial abgestützt und/oder eingespannt ist.

8. Drehmomentübertragungseinrichtung (1) nach einem der Ansprüche 1 bis 7, **dadurch gekennzeichnet, dass** die Lagerung (8) ein auf einer der Getriebeeingangswellen aufgenommenes Lager (108) umfasst, welches die Zwischendruckplatte aufnimmt.

9. Drehmomentübertragungseinrichtung (1) nach einem der Ansprüche 1 bis 8, **dadurch gekennzeichnet, dass** die Lagerung (8) ein Wälzlager umfasst mit einem auf einer der Getriebeeingangswellen aufgenommenen Innenlagerring und einem Außenlagerring, der mit der Zwischendruckplatte zumindest in axialer Richtung wirkungsmäßig verbunden ist.

10. Drehmomentübertragungseinrichtung (1) nach einem der Ansprüche 1 bis 9, **dadurch gekennzeichnet, dass** über die Lagerung (8) die Betätigungskräfte der Reibungskupplungen abgestützt werden.

## Claims

1. Torque transmission device (1) for use in the drivetrain of a motor vehicle between a drive output shaft of a drive unit and a gearbox with at least two gearbox input shafts, with the torque transmission device comprising at least two friction clutches (5, 6) which each have one clutch disc (9, 10) which can be coupled in each case to one of the gearbox input shafts, and with an intermediate pressure plate (7) being arranged between the friction linings of the two clutch discs, with it being possible for the friction linings of the two clutch discs to be clamped in each case between the intermediate pressure plate and one pressure plate (13, 14), with the respective pressure plate (13, 14) being arranged on that side of the friction linings which faces away from the intermediate pressure plate (7), with the two pressure plates (13, 14) furthermore being at least rotationally coupled to the intermediate pressure plate (7) and with it being possible for said pressure plates (13, 14) to be moved axially in relation to said intermediate pressure plate (7) by means of actuating elements (40, 4), with at least the two friction clutches forming a pre-assembled clutch unit which can be pre-mounted on the gearbox side and which can be at least rotationally fixedly connected to a drive input element, which is borne by the drive output shaft of the drive unit, during the assembly of the drive unit and gearbox, **characterized in that**, when the clutch unit is mounted, the intermediate pressure plate (7) is supported on at least one of the gearbox input shafts in at least one axial direction by means of a bearing arrangement (8), with the intermediate pressure plate (7) having a facility for radial displacement with respect to the rotational axis of the gearbox input shafts.

2. Torque transmission device (1) according to Claim 1, **characterized in that** the facility for radial displacement is provided between the bearing arrangement (8), which is held on one of the gearbox input shafts (143), and the intermediate pressure plate (7).

3. Torque transmission device (1) according to Claim 1 or 2, **characterized in that** the facility for radial displacement is ensured by means of the provision of a radial play between a component (133), which at least axially supports the intermediate pressure plate (7), and the intermediate pressure plate.

4. Torque transmission device (1) according to one of Claims 1 to 3, **characterized in that** the intermediate pressure plate (7) can be displaced in the radial direction counter to a displacement resistance provided between said intermediate pressure plate (7) and the bearing arrangement (8) and/or between the bearing arrangement (8) and the gearbox input shaft which holds said bearing arrangement (8).

5. Torque transmission device (1) according to Claim 4, **characterized in that** the displacement resistance is sufficiently large to place the intermediate pressure plate (7) in a defined position in the radial direction.

6. Torque transmission device (1) according to Claim 4 or 5, **characterized in that** the displacement resistance is generated at least by means of a frictional connection.

7. Torque transmission device (1) according to one of Claims 1 to 6, **characterized in that** the intermediate pressure plate (7) has a radially inner circumferential region (34) which is axially supported and/or clamped.

8. Torque transmission device (1) according to one of Claims 1 to 7, **characterized in that** the bearing arrangement (8) comprises a bearing (108) which is held on one of the gearbox input shafts and which holds the intermediate pressure plate.

9. Torque transmission device (1) according to one of Claims 1 to 8, **characterized in that** the bearing arrangement (8) comprises a rolling bearing having an inner bearing ring held on one of the gearbox input shafts and having an outer bearing ring which is operatively connected at least in the axial direction to the intermediate pressure plate.

10. Torque transmission device (1) according to one of Claims 1 to 9, **characterized in that** the actuating forces of the friction clutches are supported by means of the bearing arrangement (8).

## Revendications

1. Dispositif de transmission de couple (1) pour l'utilisation dans la chaîne cinématique d'un véhicule automobile entre un arbre de sortie d'une unité d'entraînement et une boîte de vitesses ayant au moins deux arbres d'entrée de boîte de vitesses, le dispositif de transmission de couple comprenant au moins deux embrayages à friction (5, 6), qui présentent chacun un disque d'embrayage (9, 10), qui peut être accouplé à chaque fois à l'un des arbres d'entrée de boîte de vitesses, et une plaque de pression intermédiaire (7) étant disposée entre les garnitures de friction des deux disques d'embrayage, les garnitures de friction des deux disques d'embrayage pouvant être serrées à chaque fois entre la plaque de pression intermédiaire et une plaque de pression (13, 14), les plaques de pression respectives (13, 14) étant disposées du côté des garnitures de friction opposé à la plaque de pression intermédiaire (7), les deux plaques de pression (13, 14) étant en outre au moins accouplées à rotation à la plaque de pression intermédiaire (7) et pouvant être déplacées axialement par rapport à celle-ci au moyen d'éléments d'actionnement (40, 41), au moins les deux embrayages à friction formant une unité d'embrayage prémontée, qui peut être prémontée du côté de la boîte de vitesses, et qui peut être connectée au moins de manière solidaire en rotation à un élément d'entraînement porté par l'arbre de sortie de l'unité d'entraînement lors de l'assemblage de l'unité d'entraînement et de la boîte de vitesses, **caractérisé en ce que** lorsque l'unité d'embrayage est montée, la plaque de pression intermédiaire (7) est supportée par le biais d'un support sur palier (8) sur au moins l'un des arbres d'entrée de boîte de vitesses dans au moins une direction axiale, la plaque de pression intermédiaire (7) présentant, par rapport à l'axe de rotation des arbres d'entrée de boîte de vitesses, une possibilité de mouvement radial.

2. Dispositif de transmission de couple (1) selon la revendication 1, **caractérisé en ce que** la possibilité de mouvement radial est prévue entre le support sur palier (8) reçu sur l'un des arbres d'entrée de boîte de vitesses (143) et la plaque de pression intermédiaire (7).

3. Dispositif de transmission de couple (1) selon la revendication 1 ou 2, **caractérisé en ce que** la possibilité de mouvement radial est assurée en prévoyant un jeu radial entre un composant (133) supportant au moins axialement la plaque de pression intermédiaire (7) et la plaque de pression intermédiaire (7).

4. Dispositif de transmission de couple (1) selon l'une quelconque des revendications 1 à 3, **caractérisé en ce que** la plaque de pression intermédiaire (7) peut être déplacée dans la direction radiale à l'encontre d'une résistance au déplacement prévue entre elle et le support sur palier (8) et/ou entre le support sur palier (8) et l'arbre d'entrée de boîte de vitesses qui le reçoit.

5. Dispositif de transmission de couple (1) selon la revendication 4, **caractérisé en ce que** la résistance au déplacement est suffisamment grande pour positionner la plaque de pression intermédiaire (7) dans la direction radiale dans une position définie.

6. Dispositif de transmission de couple (1) selon la revendication 4 ou 5, **caractérisé en ce que** la résistance au déplacement est produite au moins par une connexion par friction.

7. Dispositif de transmission de couple (1) selon l'une quelconque des revendications 1 à 6, **caractérisé en ce que** la plaque de pression intermédiaire (7) présente une région radialement interne, périphérique (34), qui est supportée axialement et/ou serrée axialement.

8. Dispositif de transmission de couple (1) selon l'une quelconque des revendications 1 à 7, **caractérisé en ce que** le support sur palier (8) comprend un palier (108) reçu sur l'un des arbres d'entrée de boîte de vitesses, et qui reçoit la plaque de pression intermédiaire.

9. Dispositif de transmission de couple (1) selon l'une quelconque des revendications 1 à 8, **caractérisé en ce que** le support sur palier (8) comprend un palier à roulement avec une bague de palier interne reçue sur l'un des arbres d'entrée de boîte de vitesses et une bague de palier externe qui est connectée fonctionnellement au moins dans la direction axiale à la plaque de pression intermédiaire.

10. Dispositif de transmission de couple (1) selon l'une quelconque des revendications 1 à 9, **caractérisé en ce que** les forces d'actionnement des embrayages à friction sont supportées par le biais du support sur palier (8).
